# EUROPEAN PATENT SPECIFICATION

(11) **EP 3 120 682 B1**
(45) Date of publication and mention of the grant of the patent: **28.02.2018**
(21) Application number: 15177482.5
(22) Date of filing: 20.07.2015
(51) Int. Cl.: A01D 34/66

(54) **ROTARY CUTTER UNIT**
ROTATIONSSCHNEIDEREINHEIT
UNITÉ DE COUPE ROTATIVE

(43) Date of publication of application: 25.01.2017
(73) Proprietor: Kverneland Group Kerteminde AS, 5300 Kerteminde (DK)
(72) Inventor: HAVERS, Thomas, 5000 Odense C (DK)
(74) Representative: Stanners, David Ralph

(56) References cited:
- US-A- 4 720 964
- US-A- 5 784 866
- US-A1- 2002 157 366
- US-A1- 2009 087 257
- US-B1- 7 536 846

## Description

The present invention relates to a rotary cutter unit for an agricultural mower, a cutter bar for an agricultural mower, and an agricultural mower that includes a cutter bar. In particular, but not exclusively, the invention relates to a rotary disc cutter unit.

A known type of agricultural mower has a cutter bar that carries a plurality of rotary cutter units. Each rotary cutter unit includes a cutter disc comprising a disc-shaped knife holder that carries a number of knives, which project radially from the edge of the disc. The cutter bar includes a drive mechanism for driving the rotary cutter units so that the cutter discs rotate about their respective axes. The drive mechanism may include a set of intermeshed gears or alternatively it may include a drive shaft that drives each of the rotary cutter units through a pair of bevel gears.

Each rotary cutter unit has a housing that is mounted on the cutter bar and a rotary shaft that is supported by the housing through a bearing. The shaft is connected at its lower end to a drive input element, for example a spur gear or a bevel gear, and the upper end of the shaft is connected to the knife holder to drive rotation of the knife holder.

In use, the cutter bar is mounted on a vehicle, for example a tractor, and extends perpendicular to the direction of travel. It may be mounted on the front or rear of the vehicle or to one side of the vehicle. The drive mechanism is driven, usually from the power take off of the vehicle, and the rotating cutter discs cut the standing agricultural crop as the vehicle advances.

If one of the rotating cutter discs hits an obstacle such as a rock, this can produce a very large transient load in the drive train, which can damage or destroy one or more of the gears. This can lead to an expensive repair and an extended idle time while the repair is carried out, possible resulting in loss of the crop.

To reduce the risk of damage to the drive train, the rotary cutter unit may include a frangible element that breaks when it is subjected to an excessive load. For example, US 4,999,981 discloses a rotary cutter unit in which the shaft that transmits drive from the drive input gear to the cutter disc has a groove formed in its surface to provide a break zone that shears if it is subjected to an excessive torque. Therefore, if the cutter disc strikes a heavy obstacle, the shaft will shear to prevent the transient load being transmitted to the drive mechanism, thereby avoiding the risk of damage to the transmission mechanism. The rotary cutter unit is designed to be easily replaceable, so that a repair can be carried out quickly and easily in the field, with minimal delay to the mowing operation.

One problem with the disc cutter unit described in US 4,999,981 is that it is possible under certain circumstances for water (e.g. rain, dew or condensation) or other liquids (e.g. sap from the crop) to enter the bearing. If this liquid later freezes and turns to ice it can damage or destroy the bearing as the ice expands. This can happen for example if liquid collects on the housing while the cutter bar is in a horizontal mowing configuration. If the cutter bar is subsequently lifted to a substantially vertical upright position, e.g. for transportation or storage, the liquid can run over the surface of the housing and into the bearing through the opening for the drive shaft. US-A-5784866 discloses (see col. 10 lines 24-34, fig. 16) a rotary cutter unit for an agricultural mower, comprising a housing (bearing block 63), that carries a rotary bearing having an axis of rotation, and a rotor assembly (45,61,62,65) that is supported by the bearing for rotation relative to the housing about the axis of rotation, the rotor assembly including a shaft (61) that extends through the bearing, a drive input element (62) at an input end of the shaft for transmitting rotary drive to the shaft, and a drive output element (45) at an output end of the shaft to receive rotary drive from the shaft, wherein the housing includes a sleeve (bearing block 63 surrounds the bearing) having a first end and a second end, a first flange at the first end of the sleeve and a second flange at the second end of the sleeve, wherein the first and second flanges extend radially outwards from the sleeve to define a channel on an outer surface of the sleeve between the first and second flanges. However, no frangible element breaking when subjected to an excessive load is provided.

It is an object of the present invention to provide a rotary cutter unit that mitigates one or more of the problems associated with existing rotary cutter units.

According to the present invention there is provided a rotary cutter unit for an agricultural mower according to claim 1. The channel guides liquids away from the opening for the shaft and so prevents the liquids from entering the bearing. This protects the bearing from frost damage if it is subsequently exposed to freezing conditions. According to the invention the channel has a substantially U-shaped profile. According to the invention the channel extends circumferentially around the sleeve.

The first flange may comprise a mounting flange for mounting the rotary cutter unit to a cutter bar.

In an embodiment, the channel lies in a plane that is substantially horizontal when the rotary cutter unit is configured for a mowing operation, and substantially vertical when the rotary cutter unit is configured for transportation or storage.

The channel may be arranged such that when the rotary cutter unit is configured for transportation or storage with the channel in a substantially vertical plane, any free liquid on the surface of the housing is guided to flow under gravity along the channel.

The frangible element may comprise a weakened portion of the shaft between the drive input element and the drive output element.

The drive input element may comprise a gear.

Optionally, the drive output element comprises or is attached to a rotary cutter assembly that includes a plurality of cutter knives.

The rotary cutter unit may include a frangible element between the drive input element and the drive output element, which is configured to break when subjected to an excessive load so as to interrupt the transmission of rotary drive between the drive input element and the drive output element. This prevents damage to the drive mechanism driving the rotary cutter unit (for example, a train of gears in the cutter bar) in event that the rotary cutter unit strikes an obstacle. In that case, instead of transmitting the transient load to the drive train and potentially damaging the drive train, the frangible element breaks, thereby interrupting the transmission of rotary drive between the drive input element and the drive output element.

After the frangible element has broken the retention mechanism prevents the drive output element separating from the housing, thereby preventing the rotating disc from escaping and running loose and avoiding the dangers associated with a loose disc.

The rotary cutter unit is designed to be easy and quick to replace, allowing a damaged unit to be removed and replaced quickly in the field without any specialised equipment. The mowing operation can thus be interrupted for only a minimal period. The mechanism of the rotary cutter unit is simple and reliable and does not affect normal operation of the mowing machine. The rotary cutter unit is also relatively inexpensive to manufacture and assemble.

Optionally, the frangible element comprises a weakened portion of the shaft between the drive input element and the drive output element. The weakened portion of the shaft may be provided by forming a circumferential groove or slot in the surface of the shaft.

Optionally, the drive input element comprises a gear, for example a spur gear or a bevel gear.

Optionally, the drive output element comprises or is attached to a rotary cutter assembly that includes a plurality of cutter knives, for example a cutter disc.

According to another embodiment of the present invention there is provided a cutter bar for an agricultural mower, comprising a support structure, a plurality of rotary cutter units according to any one of the preceding statements of invention, each rotary cutter unit being mounted on the support structure, and a drive mechanism that drives the drive input element of each rotary cutter unit.

Optionally, the support structure comprises an enclosed carrying beam, wherein the drive mechanism is housed within the enclosed carrying beam, and wherein the housing of each rotary cutter unit is mounted on the carrying beam such that the shaft extends through an aperture in the carrying beam, the drive input element of each rotary cutter unit is located internally of the carrying beam in engagement with the drive mechanism, and the drive output element of each rotary cutter unit is located externally of the carrying beam.

According to an embodiment of the present invention there is provided an agricultural mower including a cutter bar according to any one of the preceding statements of invention, and a vehicle that supports the cutter bar.

Certain embodiments of the invention will now be described, by way of example, with reference to the accompanying drawings, in which:
Figure 1 is a top plan view of a cutter bar that includes a plurality of first rotary cutter units, according to a first embodiment of the invention;
Figure 2 is a top plan view showing part of the cutter bar of Figure 1 at an enlarged scale;
Figure 3 is a cross-sectional view on line III-III of Figure 1, showing the cutter bar and a first rotary cutter unit;
Figure 4 is an isometric view of a housing and rotor assembly that forms part of the first rotary cutter unit, in a locked configuration;
Figure 5 is an isometric view of the housing and rotor assembly in an unlocked configuration;
Figure 6 is a cross-section on line VI-VI of figure 4, showing a retention mechanism in the locked configuration;
Figure 7 is an enlarged cross-section showing part of the retention mechanism in the locked configuration;
Figure 8 is an enlarged cross-section showing part of the retention mechanism in the unlocked configuration;
Figure 9 is a top plan view of the housing;
Figure 10 is an isometric view showing part of the housing;
Figure 11 is a side sectional view of the housing shown in a storage or transportation position;
Figure 12 is a cross-sectional view showing a cutter bar and a second rotary cutter unit, according to a second embodiment of the invention;
Figure 13 is an isometric view of a housing and rotor assembly that forms part of the second rotary cutter unit, in a fully assembled condition;
Figure 14 is an isometric view of the housing and a rotor assembly of the second rotary cutter unit, in a partially assembled condition;
Figure 15 is an enlarged side sectional view of the second rotary cutter unit;
Figure 16 is an enlarged side sectional view showing part of a retention mechanism of the second rotary cutter unit;
Figure 17 is a cross-sectional view showing part of a third rotary cutter unit, according to a third embodiment of the invention;
Figure 18 is an isometric view showing a pair of retention elements that form part of the retention mechanism of the third rotary cutter unit;
Figure 19 is a side sectional view showing part of a fourth rotary cutter unit, according to a fourth embodiment of the invention;
Figure 20 is a side sectional view showing part of a fifth rotary cutter unit, according to a fifth embodiment of the invention;
Figure 21 is an isometric view showing a housing and rotor assembly of a sixth rotary cutter unit, according to a sixth embodiment of the invention;
Figure 22 is a side sectional view of the sixth rotary cutter unit;
Figure 23 is an isometric view of a housing component of the sixth rotary cutter unit;
Figure 24 is a side sectional view of the sixth rotary cutter unit, mounted on a cutter bar;
Figure 25 is a top plan view of the housing of the sixth rotary cutter unit, and
Figure 26 is a top plan view of a housing and rotor assembly of the sixth rotary cutter unit.

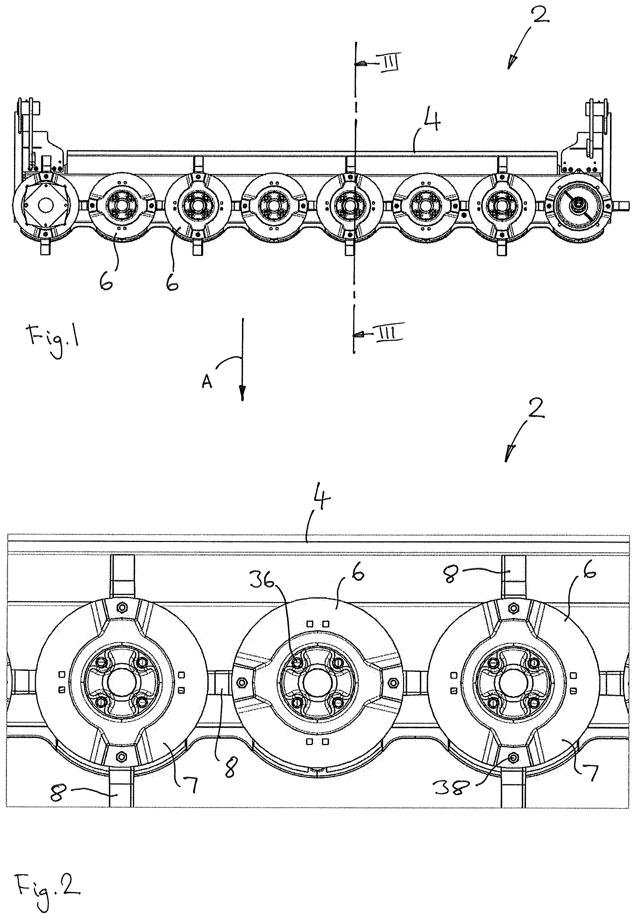

Figures 1 to 3 illustrate a cutter bar for an agricultural mower. Certain parts of the cutter bar are conventional and may, for example, be similar to the corresponding parts of the mower described in US 4,999,981. The various embodiments of the invention described below and shown in the accompanying drawings may each include a cutter bar substantially as shown in Figures 1 to 3, but incorporating the modifications as described below.

The mower unit 2 includes an elongate cutter bar 4 and a plurality of rotary cutter units 6 that are mounted on the cutter bar 4. The cutter bar 4 houses a drive mechanism for driving the rotary cutter units 6, and each rotary cutter unit 6 carries a rotating cutter disc 7 that has on its periphery one or more knives 8 that rotate with the cutter disc 7. In use, the mower unit 2 travels in a travel direction as indicated by arrow A and the rotary cutter units 6 cut a standing agricultural crop as the mower advances.

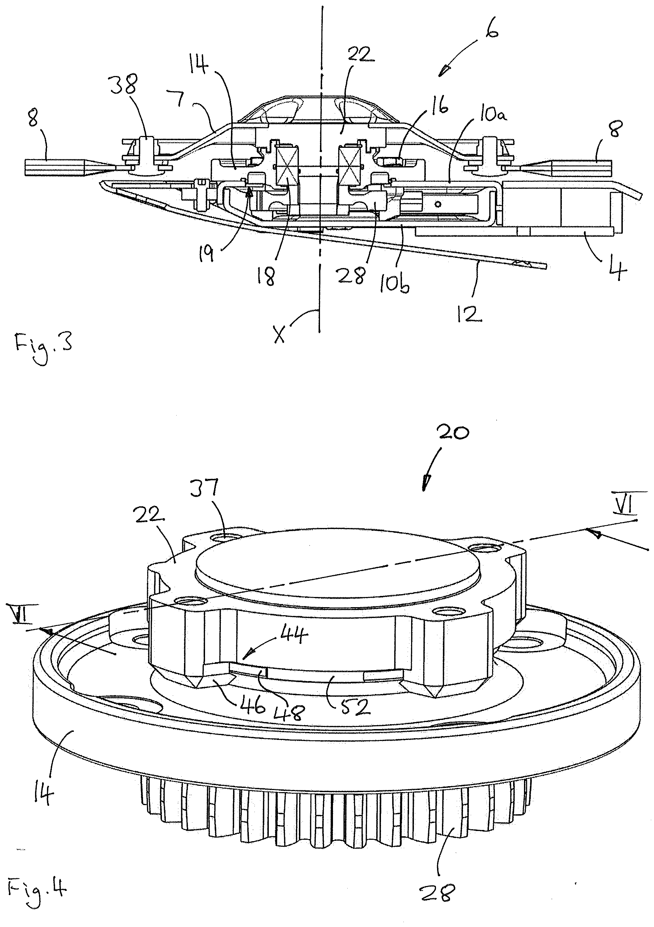

The structure of a first rotary cutter unit 6 according to a first embodiment of the invention is illustrated in Figure 3. Other rotary cutter units forming alternative embodiments of the invention are described below and are illustrated in the accompanying drawings: these alternative designs are all variants of the first rotary cutter unit and, except where indicated otherwise, include similar features.

The rotary cutter units 6 are carried by the cutter bar 4. As illustrated in Figure 3, the cutter bar 4 consists of an enclosed housing comprising a top plate 10a and a bottom plate 10b. The cutter bar 4 houses a drive mechanism for driving the rotary cutter units 6, which may consist either of a train of gears, for example as described in US 5,715,662, or a drive shaft and a set of transfer gears, for example as described in US 6,675,563. A skid 12 is attached to and extends rearwards beneath the cutter bar 4.

Each rotary cutter unit 6 includes a housing 14 that is attached to the top plate 10a of the cutter bar 4, for example with bolts 16. The housing 14 has a sleeve portion 14a with a bore 14c that supports a rotary bearing 18, and a flange portion 14b that extends radially outwards from the lower end of the sleeve 14a and lies against the upper surface of the cutter bar top plate 10a. An O-ring 15 may be provided in a slot 17 in the inner surface of the bore 14c, to provide a seal between the sleeve portion 14a and the bearing 18. The flange portion 14b covers a hole 19 in the top plate 10a, through which the lower parts of the rotary cutter unit 6 extend.

Each rotary cutter unit 6 includes a rotor assembly 20 that is supported by the bearing 18 and is mounted for rotation about the rotary axis X of the bearing 18. The rotor assembly 20 includes a hub element 22 having a shaft 24 that is supported by the bearing 18. The lower part of the shaft 24 carries a set of splines 26 that engage a cylindrical or plain gear 28, which is mounted on the lower part of the shaft. The gear 28 is retained by a nut 30 that engages a screw thread provided on the lower end of the shaft 24. The gear 28 comprises a drive input element that transmits rotary drive to the shaft from the drive mechanism contained within the cutter bar 4.

The hub element 22 also includes a flange 32 at the upper end of the shaft 24, which extends radially outwards from the shaft. The flange 32 comprises a drive output element for transmitting rotary drive from the hub element 22 to the cutter disc 7, which is attached to the flange 32 for example by bolts 36, received in threaded holes 37. The cutter disc 7 comprises a knife holder that carries the knives 8, which are attached to the periphery of the cutter disc 7 by knife bolts 38. The knives 8 are able to rotate about the axes of the knife bolts 38, allowing them to absorb impacts with small obstacles. In use, the centrifugal force acting on the rotating knives 8 causes them to extend radially outwards from the periphery of the cutter disc 7.

The shaft 24 includes a frangible element 40, which allows the shaft to break when it is subjected to an excessive torque. The frangible element 40 may, for example, be created by forming a groove or slot 42 in the surface of the shaft to form a weakened portion the shaft. The frangible element 40 is designed to protect the drive gear 28 and the drive mechanism housed within the cutter bar 4 in the event that the rotating cutter disc 7 strikes a large obstacle, which prevents or restricts continued rotation of the rotary cutter unit. If this happens, the frangible element 40 is designed to shear, thus breaking the shaft 24 into two separate parts and preventing the transmission of torque between the drive input element (gear 28) and the drive output element (the hub flange 32). This prevents large impulse forces being transmitted to the drive mechanism and so protects the drive mechanism from damage.

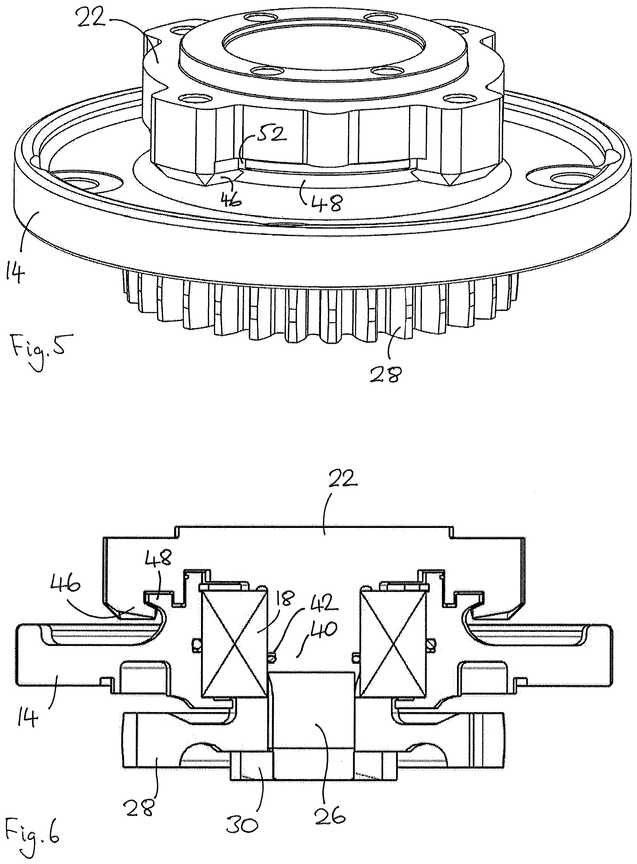

The rotary cutter unit 6 also includes a retention mechanism 44 that prevents separation of the drive output element (the hub flange 32) and the cutter disc 7 from the housing 14 in the event that the frangible element 40 breaks. The retention mechanism 44 is shown most clearly in Figures 4 to 10.

In the first embodiment of the invention the retention mechanism 44 includes a set of retention claws 46 that depend from the lower end of the hub flange 32 and extend radially inwards towards the rotational axis X of the bearing 18. The retention mechanism 44 also includes a retention flange 48 that extends radially outwards from the upper end of the housing sleeve 14a. The retention claws 46 are located beneath the retention flange 48 and extend radially inwards beyond the outer periphery of the retention flange 48, thus preventing axial separation of the drive output element 32 from the housing 14. A small gap 50 is provided between the claws 46 and the flange 48 so that rotation of the hub element 22 relative to the housing 14 is not impeded prior to breakage of the frangible element 40.

In this embodiment four retention claws 46 are provided, which are spaced equidistantly from each other. It should be understood however that more or fewer retention claws may alternatively be provided.

In order to allow for assembly and disassembly of the rotary cutter unit 6, the retention flange 48 includes a plurality of cut-out portions 52, each of which is formed by cutting away the radially outer part of the flange 48 to provide a recess through which a retaining claw 46 can pass. The number and the spacing of the cut-out portions 52 are matched to the number and the spacing of the claws 46, each cut-out portion 52 being only fractionally larger than the corresponding claw 46, so that the claw 46 can pass through the cut-out portion 52 only when both are accurately aligned. The hub flange 32 that carries the claws must also be stationary relative to the housing 14: if there is any relative rotation between the hub flange 32 and the housing 14 it will be impossible for the retaining claws 46 to pass through the cut-out portions 52. This prevents axial separation of the hub element 22 from the housing 18, except when the hub element is stationary (not rotating) and is positioned so that the retaining claws 46 are aligned with the cut-out portions 52.

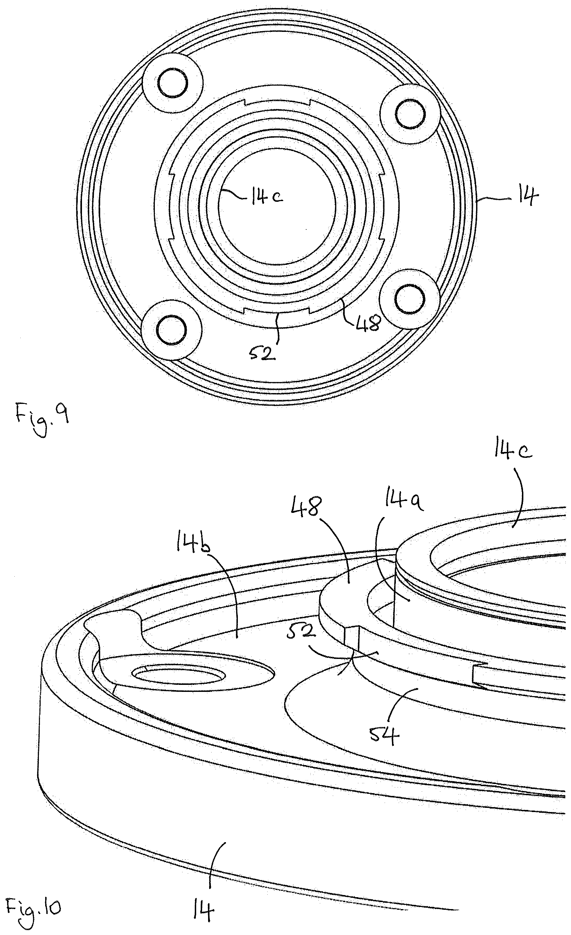

In the embodiment shown in Figs. 4-10 the retaining claws 46 and the corresponding cut-out portions 52 are equally spaced and all the same size. In this case the number of different positions of the hub element 22 in which the retaining claws 46 can be aligned with the cut-out portions 52 is equal to the number of retaining claws 46 and cut-out portions 52. For example, in this embodiment there are four equally-spaced, identical claws 46 and four cut-out portions 52, and there are four positions of the hub element 22 in which the claws 46 are correctly aligned with the cut-out portions 52 to allow axial separation of the hub element 22 from the housing 18. There may alternatively be more or fewer claws and cut-out portions. Also, the edges of the claws and cut-out portions do not have to be sharp as shown in Fig. 9: they could be rounded.

Alternatively, the retaining claws 46 and the corresponding cut-out portions 52 may be of unequal size and/or may be unequally spaced. In this case, the number of different positions of the hub element in which the retaining claws 46 can pass through the cut-out portions 52 will be reduced, in some cases to a single unique position. For example, if the hub flange carries two identical claws and a third larger claw, and the retention flange 48 similarly has two identical cut-out portions and one larger cut-out portion 50, there will be only one position in which the claws can pass through the cut-out portions, which will be when the larger claw is aligned with the larger cut-out portion. The same effect can be achieved by spacing the claws unevenly around the hub flange 32 and providing an identical uneven spacing for the cut-out portions, so that the claws can be aligned with the cut-out portions only in a single unique position of the hub element 22.

Optionally, the rotary cutter unit 6 has a modular design and is designed to be replaced as a single unit. If a rotary cutter unit 6 breaks as a result of the cutter disc 7 striking an obstacle, it can be removed by undoing the bolts 16 that attach the rotary cutter unit 6 to the cutter bar 4 and lifting the rotary cutter unit 6 away. A new rotary cutter unit 6 can then be attached to the cutter bar 4 by inserting the lower part of the rotary cutter unit 6 through the hole 9 so that the drive gear 28 engages the drive mechanism within the cutter bar housing, and reattaching the bolts 16. The rotary cutter unit 6 can therefore be replaced in-situ with minimal interruption to the mowing operation.

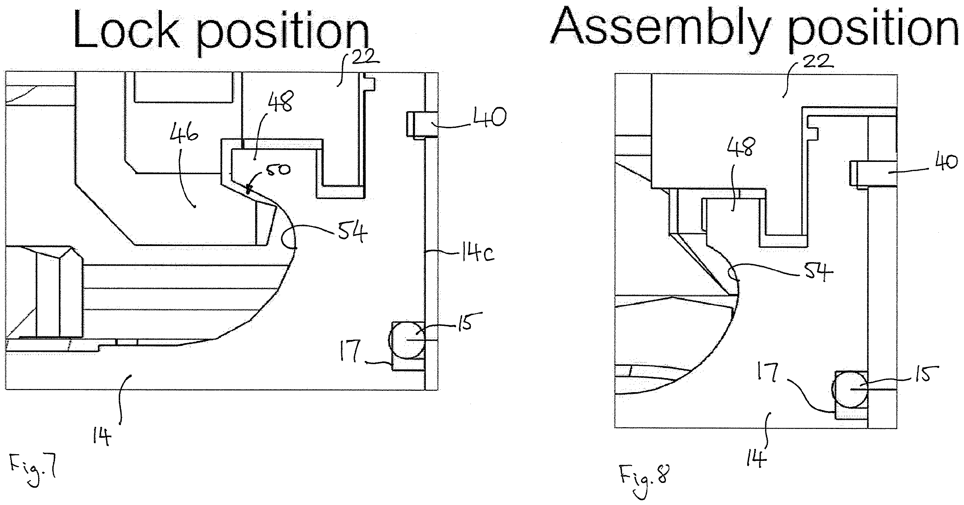

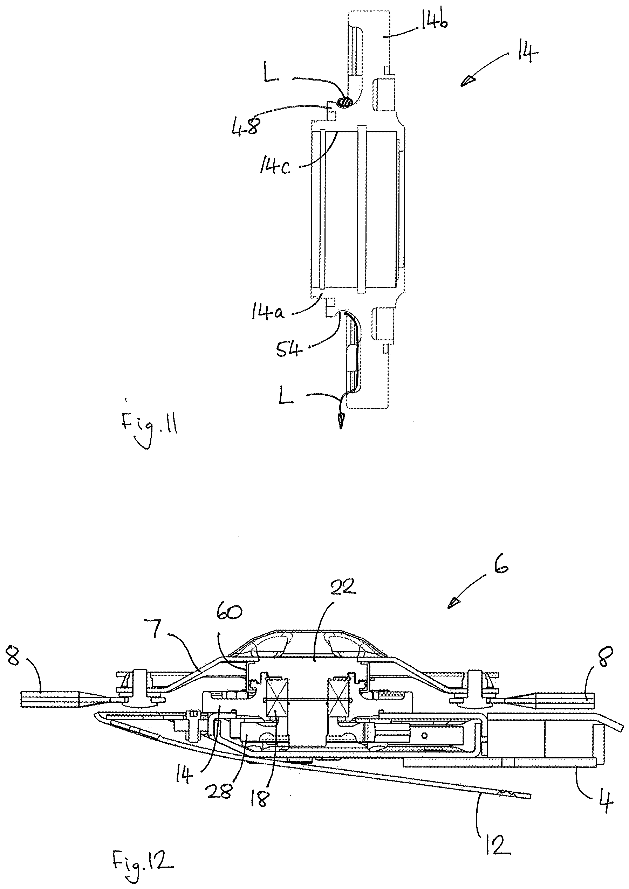

Referring to Figures 7 and 8, it can be seen that the outer surface of the housing 14 has a curved profile providing an approximately U-shaped channel 54 that extends around the circumference of the housing between the fixing flange 14b and the retention flange 48. The channel 54 helps to prevent water/liquids from entering the bearing 18, particularly when the cutter bar 4 is lifted for transportation or storage to an upright position, as shown in Figure 11. When this happens, any liquid that has collected on the housing (for example, rain, condensation or sap from processed crops) will flow around the channel 54 and then run off the housing at its lowest point. Figure 11 shows a typical flow path L for liquid flowing off the housing 14 when it is in an upright position. The retention flange 48 prevents the liquid from flowing towards the bore 14c in the housing 14, and so prevents it from entering the bearing 18. This reduces the risk of damage to the bearing if, for example, water enters the bearing and then freezes, potentially destroying the bearing.

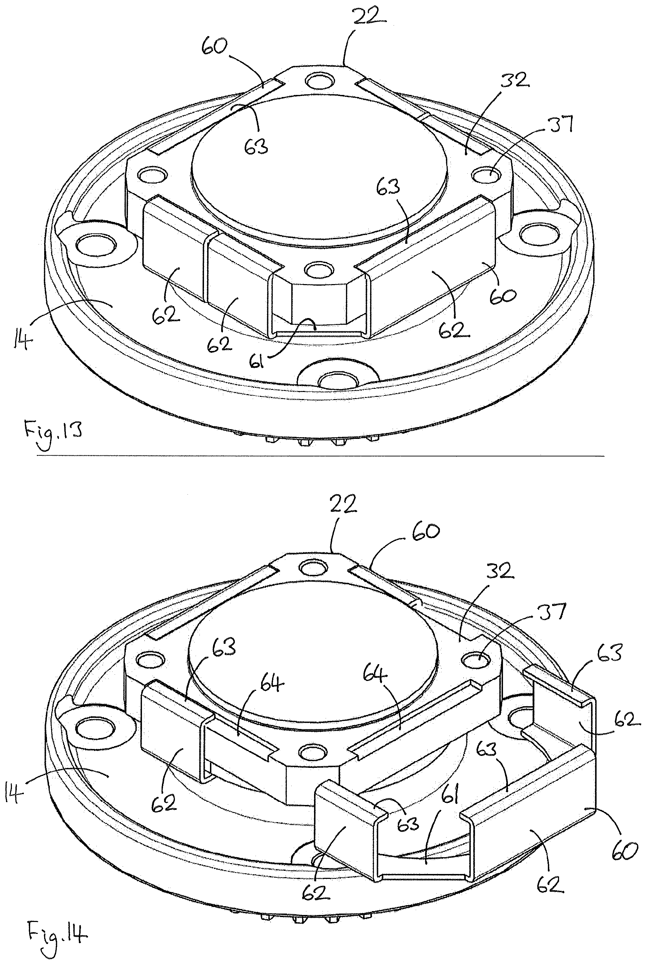

Figures 12-16 illustrate a second embodiment of the invention, in which the rotary cutter unit 6. is similar in many respects to the first rotary cutter unit, as described above. The foregoing description of the first rotary cutter unit therefore applies equally to the second rotary cutter unit 6, except as indicated below.

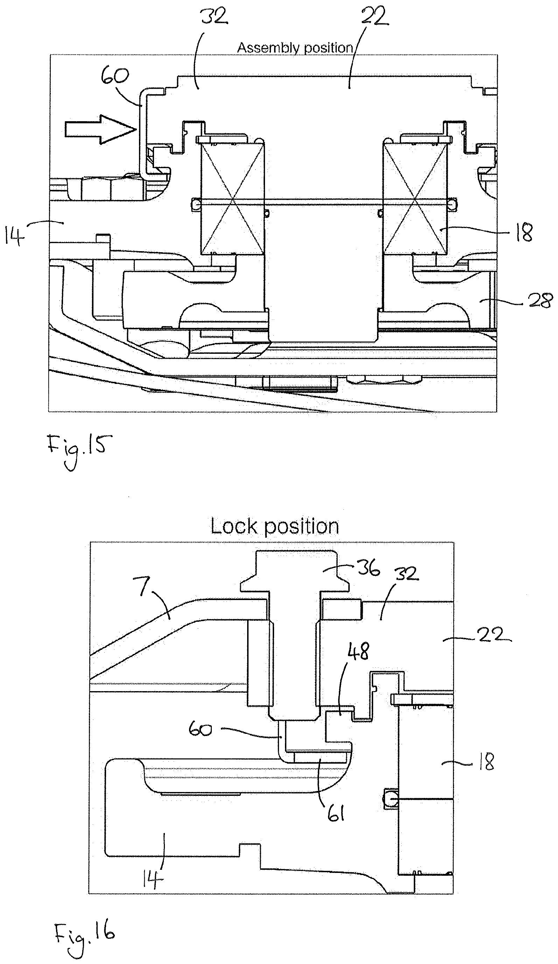

In this embodiment the retention mechanism 44 includes a pair of lock brackets 60 (or detachable retaining elements) that are attached to the hub flange 32. Each lock bracket 60 has a base plate 61 with a semi-circular inner edge, and three clamping members 62 that extend upwards from the base plate 61, each clamping member 62 having an inwards-extending tongue 63 at its upper end. The tongues 63 engage respective recesses 64 around the peripheral edge of the hub flange 32. When the cutter disc 7 is attached to the hub 22 with bolts 36 as shown in Fig. 16, the cutter disc 7 clamps the lock brackets 60 to the hub flange 32, securing them in position.

The semi-circular base plate 61 of each lock bracket 60 extends radially inwards beneath the retaining flange 48, towards the hub shaft 24. If the frangible element 40 breaks (the frangible element being similar to that of the first embodiment), the base plate 61 engages the retention flange 48 to prevent the hub flange 32 and the attached cutter disc 7 separating from the housing 14. Prior to breaking, the lock brackets 60 are spaced from the retention flange 48 so that they do not impede rotation of the rotor assembly 20.

The lock brackets 60 are removably attached to the hub flange 32 and may be removed to permit assembly or disassembly of the rotary cutter unit 6. Therefore, in this embodiment the retaining flange 48 does not require cut-out portions.

In this embodiment the hub flange 32 is approximately square in shape with chamfered corners, and two lock brackets 60 are provided, which engage the recesses 64 on three sides of the hub flange 32. It will be appreciated that the hub flange 32 could have a different shape and different numbers of lock brackets 44 could be provided.

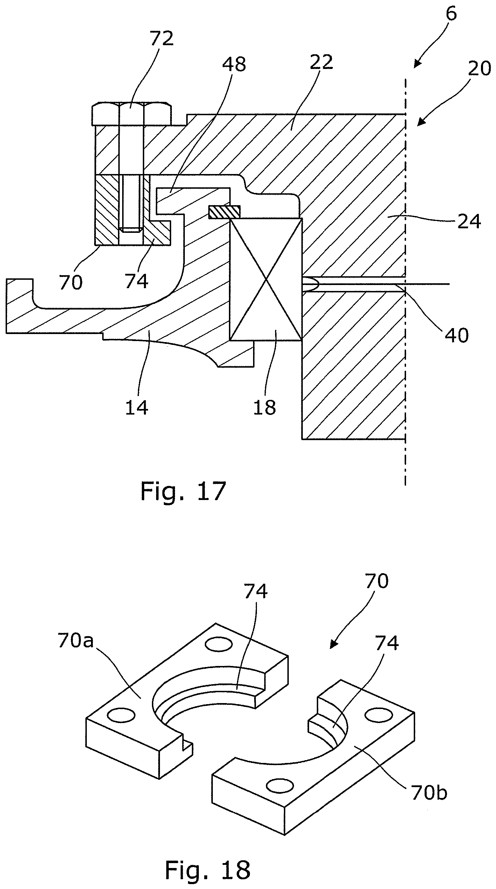

A third embodiment of the invention is illustrated in Figures 17 and 18. Again, the rotary cutter unit 6 is similar in many respects to the rotary cutter unit of the first embodiment, as described above. The foregoing description therefore applies equally to the third embodiment, except as indicated below.

In this embodiment the retaining mechanism includes a ring element 70 that is attached to the underside of the hub flange 32 with bolts 72. The ring element is divided into two ring parts 70a, 70b, which fit together to form a complete ring element when the rotary cutter unit 4 is assembled. The ring element 70 includes an inwardly extending flange 74 at its lower end, which is located beneath the retaining flange 48. If the frangible element 40 breaks (the frangible element again being similar to that of the first embodiment), the ring element flange 74 engages the retaining flange 48 to prevent the hub element 22 separating from the housing 14. Prior to breaking, the ring element is spaced from the retaining flange 48 so that it does not impede rotation of the rotor assembly 20.

The ring element 70 is removably attached to the hub flange 32, for example by bolts 72. The ring element 70 can therefore be removed to permit assembly or disassembly of the rotary cutter unit 6. In this embodiment the ring element 70 comprises two ring parts 70a, 70b. However, it will be understood that the ring element 70 could include a larger number of ring parts.

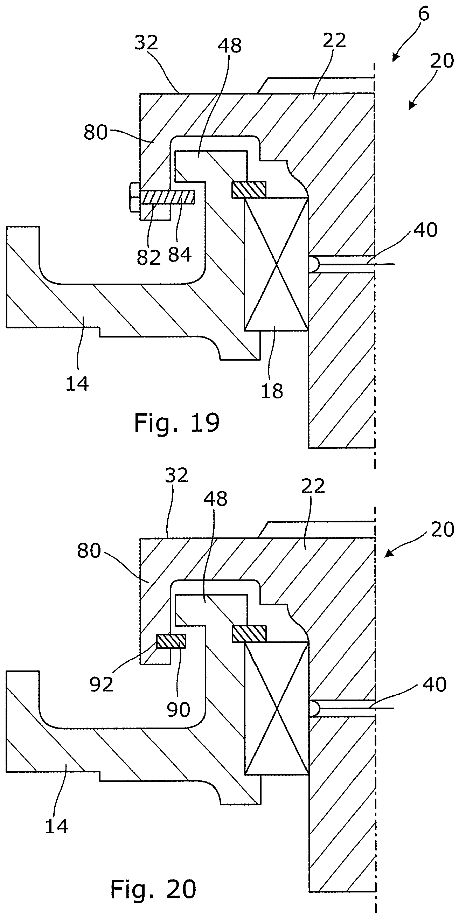

A fourth embodiment of the invention is illustrated in Figure 19. Again, in this embodiment the rotary cutter unit 6 is similar in many respects to the rotary cutter unit of the first embodiment, as described above. The foregoing description therefore applies equally to the fourth embodiment, except as indicated below.

In this embodiment the hub flange 32 includes a depending sleeve 80 at its outer periphery, which extends downwards beyond the position of the retaining flange 48. A set of threaded holes 82 are provided in the depending sleeve 80, which receive a set of bolts 84. The bolts 84 extend inwards beneath the retaining flange 48 and, if the frangible element 40 breaks, (the frangible element again being similar to that of the first embodiment), the bolts 84 engage the retaining flange 48 to prevent the hub element 22 separating from the housing 14. Prior to breaking, the bolts 84 are spaced from the retaining flange 48 so that they do not impede rotation of the rotor assembly 20.

The bolts 84 can be removed from the holes 82, allowing assembly or disassembly of the rotary cutter unit 6. It will be appreciated that any number of bolts 84 could be provided, although 3 or 4 bolts would be typical.

Figure 20 illustrates a fifth embodiment of the invention. The rotary cutter unit in this case is very similar to the rotary cutter unit of the fourth embodiment, shown in Figure 19, and includes a sleeve 80 that depends from the hub flange 32 and extends downwards beyond the retaining flange 48. In this case, instead of bolts 84, the retaining mechanism 44 comprises a circlip 90, or Seeger ring, which is received in an inwards facing slot 92 provided towards the lower end of the sleeve 80. The circlip 90 is made of an elastic material, for example spring steel, and when unloaded it has an outer diameter that is greater than the inner diameter of the slot 92. Therefore, when the circlip 90 is positioned in the slot 92 it is slightly compressed and is retained in the slot 92 by the elastic tension within the ring.

The circlip 90 extends radially inwards from the sleeve 80 and is positioned below the retaining flange 48. If the frangible element 40 breaks (the frangible element being similar to that of the first embodiment), the circlip 90 engages the retaining ring 48 to prevent the hub element 22 separating from the housing 14. Prior to breaking, the circlip 90 is spaced from the retaining flange 48 so that it does not impede rotation of the rotor assembly 20.

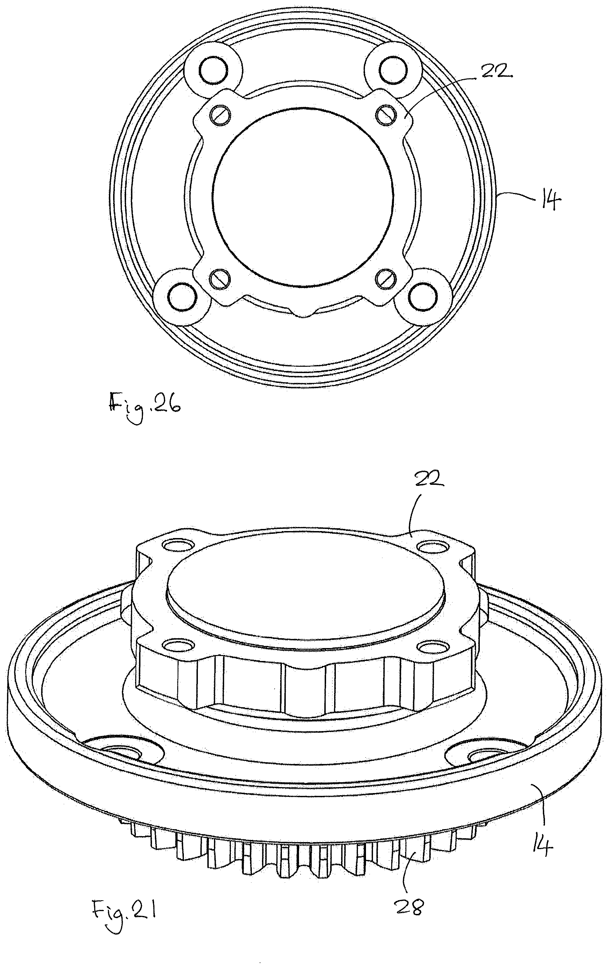

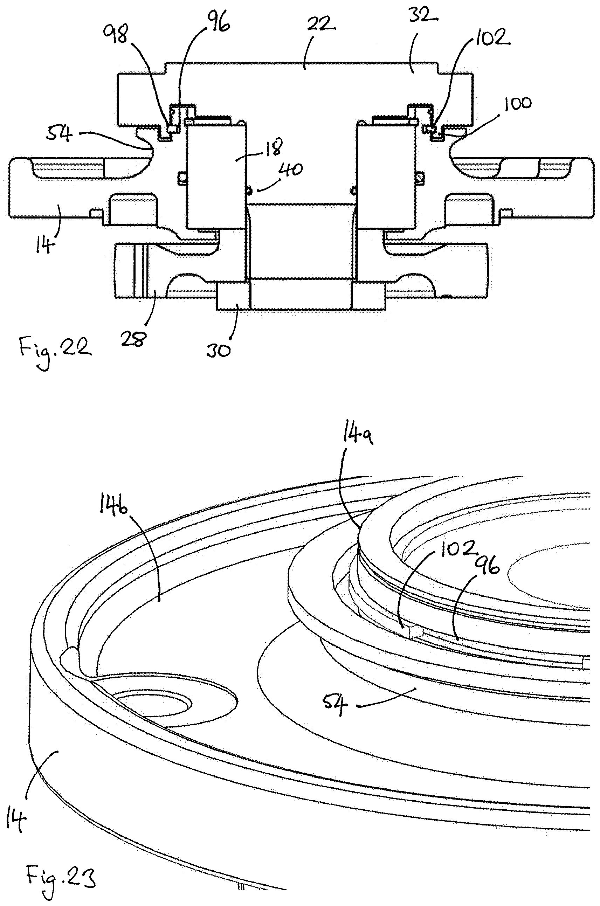

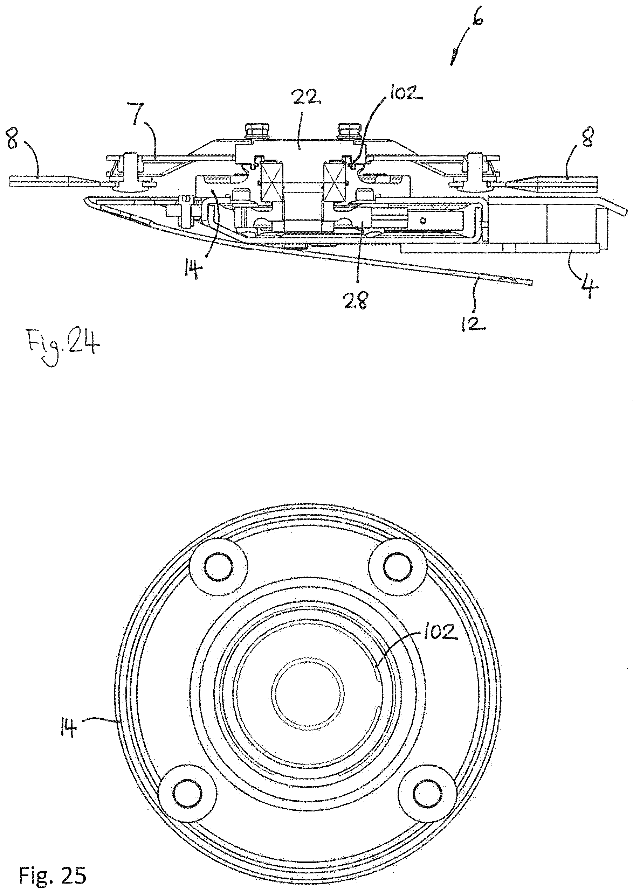

A sixth embodiment of the invention is illustrated in Figures 21 to 26. In this embodiment the rotary cutter unit is very similar to that shown in Figure 20 and the foregoing description therefore applies, except as indicated below. In this embodiment the housing 14 does not include a retaining flange 48, but instead is provided with an outwards facing slot 96, which is provided in the sleeve portion 14a of the housing 14. A corresponding inwards facing slot 98 is provided in a depending portion 100 of the hub flange 32. A retaining ring 102, for example a circlip or a Seeger ring, is located in the slot 96 in the housing 14. The retaining ring 102 is made of an elastic material, for example spring steel or carbon fibre, and it has an outer diameter that is greater than the diameter of the sleeve portion 14a and an inner diameter that is smaller than the diameter of the sleeve portion 14a. The retaining ring 102 is therefore retained within the slot 96, but extends outwards beyond the surface of the sleeve portion 14a.

The outer part of the retaining ring 102 engages the inwards facing slot 98 in the depending portion 100 of the hub flange 32. Therefore, if the frangible element 40 breaks (the frangible element again being similar to that of the first embodiment), the retaining ring 102 prevents the hub element 22 separating from the housing 14. Prior to breaking, the retaining ring 102 does not impede rotation of the rotary assembly 20, as it is sized to rotate freely with at least one of the inner and outer slots 96, 98.

Optionally (and not illustrated in the drawings), the depending sleeve portion 100 may have a chamfered surface at its lower end, which urges the retaining ring 102 radially inwards when the hub 22 is pressed downwards, thus allowing the depending sleeve portion 100 to ride over the retaining ring 98. When the hub element has been pressed down far enough relative to the housing 14, so that the retaining ring 102 is aligned with the inwards facing slot 98, the retaining ring 102 springs outwards and engages the slot 98 to secure the hub element 22 to the housing 14.

The embodiment illustrated in Figures 21 to 26 has the advantage that the retaining ring 102 is entirely enclosed within the inner and outer slots 96, 98 and is therefore inaccessible without the use of specialised tools. This retaining mechanism is therefore particularly suitable for use in rotary cutter units that are not designed to be user serviceable.

## Claims

1. A rotary cutter unit (4, 6) for an agricultural mower, comprising a housing (14, 18) that carries a rotary bearing (18) having an axis of rotation, and a rotor assembly (20) that is supported by the bearing (18) for rotation relative to the housing (14, 18) about the axis of rotation, the rotor assembly (20) including a shaft (24) that extends through the bearing (18), a drive input element at an input end of the shaft (24) for transmitting rotary drive to the shaft (24), and a drive output element (32) at an output end of the shaft (24) to receive rotary drive from the shaft (24), a frangible element (40) between the drive input element and the drive output element (32), which is configured to break when subjected to an excessive load so as to interrupt the transmission of rotary drive between the drive input element and the drive output element (32), and a retention mechanism (44) that prevents separation of the drive output element (32) from the housing (14, 18) when the frangible element (40) breaks but permits rotation of the drive output element (32) relative to the housing (14, 18), wherein the housing (14, 18) includes a sleeve (14A, 80) having a first end and a second end, a first flange (32, 48) at the first end of the sleeve (14A, 80) and a second flange (32, 48) at the second end of the sleeve (14A, 80), wherein the first and second flanges extend radially outwards from the sleeve (14A, 80) to define a channel (54) on an outer surface of the sleeve (14A, 80) between the first and second flanges, wherein the retention mechanism (44) includes a set of retention claws (46) that extend radially inwards beyond an outer periphery of at least one of the flanges, and wherein the channel (54) has a substantially U-shaped profile and extends circumferentially around the sleeve.

2. A rotary cutter unit (4, 6) according to claim 1, wherein the first flange (32, 48) comprises a mounting flange (32, 48) for mounting the rotary cutter unit (4, 6) to a cutter bar (4).

3. A rotary cutter unit (4, 6) according to any one of the preceding claims, wherein the channel (54) lies in a plane that is substantially horizontal when the rotary cutter unit (4, 6) is configured for a mowing operation, and substantially vertical when the rotary cutter unit (4, 6) is configured for transportation or storage.

4. A rotary cutter unit (4, 6) according to claim 3, wherein the channel (54) is arranged such that when the rotary cutter unit (4, 6) is configured for transportation or storage with the channel (54) in a substantially vertical plane, any free liquid on the surface of the housing (14, 18) is guided to flow under gravity along the channel (54).

5. A rotary cutter unit (4, 6) according to any preceding claim, wherein the frangible element (40) comprises a weakened portion (50, 52) of the shaft (24) between the drive input element and the drive output element (32).

6. A rotary cutter unit (4, 6) according to any preceding claim, wherein the drive input element comprises a gear (28).

7. A rotary cutter unit (4, 6) according to any preceding claim, wherein the drive output element (32) comprises or is attached to a rotary cutter assembly that includes a plurality of cutter knives (8).

8. A cutter bar (4) for an agricultural mower, comprising a support structure, a plurality of rotary cutter units (6) according to any one of the preceding claims, each rotary cutter unit (4, 6) being mounted on the support structure, and a drive mechanism that drives the drive input element of each rotary cutter unit (4, 6).

9. A cutter bar (4) according to claim 8, wherein the support structure comprises an enclosed carrying beam, wherein the drive mechanism is housed within the enclosed carrying beam, and wherein the housing (14, 18) of each rotary cutter unit (4, 6) is mounted on the carrying beam such that the shaft (24) extends through an aperture in the carrying beam, the drive input element of each rotary cutter unit (4, 6) is located internally of the carrying beam in engagement with the drive mechanism, and the drive output element (32) of each rotary cutter unit (4, 6) is located externally of the carrying beam.

10. An agricultural mower including a cutter bar (4) according to any one of the preceding claims 8 or 9 and a vehicle that supports the cutter bar (4).

## Patentansprüche

1. Drehschneideinheit (4, 6) für einen Rasenmäher, umfassend ein Gehäuse (14, 18), das ein Drehlager (18) enthält, das eine Drehachse aufweist, und eine Rotorbaugruppe (20), die durch das Lager (18) zur Drehung um die Drehachse relativ zum Gehäuse (14, 18) gehalten wird, wobei die Rotorbaugruppe (20) eine Welle (24), die sich durch das Lager (18) erstreckt, ein Antriebseingangselement an einem Eingangsende der Welle (24) zum Übertragen von Drehantrieb an die Welle (24), und ein Antriebsausgangselement (32) an einem Ausgangsende der Welle (24) zum Empfangen von Drehantrieb von der Welle (24), ein zerbrechliches Element (40) zwischen dem Antriebseingangselement und dem Antriebsausgangselement (32), das ausgelegt ist, zu brechen, wenn es einer Überlast ausgesetzt wird, um die Übertragung von Drehantrieb zwischen dem Antriebseingangselement und dem Antriebsausgangselement (32) zu unterbrechen, und einen Rückhaltemechanismus (44) beinhaltet, der das Trennen des Antriebsausgangselements (32) vom Gehäuse (14, 18) verhindert, wenn das zerbrechliche Element (40) bricht, aber die Drehung des Antriebsausgangselements (32) relativ zum Gehäuse (14, 18) zulässt, wobei das Gehäuse (14, 18) eine Manschette (14A, 80) beinhaltet, die ein erstes Ende und ein zweites Ende, einen ersten Flansch (32, 48) am ersten Ende der Manschette (14A, 80) und einen zweiten Flansch (32, 48) am zweiten Ende der Manschette (14A, 80) aufweist, wobei sich der erste und der zweite Flansch radial von der Manschette (14A, 80) nach außen erstrecken, um einen Kanal (54) an einer Außenseite der Manschette (14A, 80) zwischen dem ersten und zweiten Flansch zu definieren, wobei der Rückhaltemechanismus (44) einen Satz Rückhaltekrallen (46) beinhaltet, die sich radial nach innen über einen Außenumfang von mindestens einem der Flansche hinaus erstrecken, und wobei der Kanal (54) eine im Wesentlichen U-förmige Kontur aufweist und sich umlaufend um die Manschette erstreckt.

2. Drehschneideinheit (4, 6) nach Anspruch 1, wobei der erste Flansch (32, 48) einen Befestigungsflansch (32, 48) zum Befestigen der Drehschneideinheit (4, 6) an einem Mähwerk (4) umfasst.

3. Drehschneideinheit (4, 6) nach einem der vorhergehenden Ansprüche, wobei der Kanal (54) in einer Ebene liegt, die im Wesentlichen waagerecht ist, wenn die Drehschneideinheit (4, 6) für einen Mähvorgang ausgelegt ist, und im Wesentlichen senkrecht ist, wenn die Drehschneideinheit (4, 6) zum Transport oder zum Lagern ausgelegt ist.

4. Drehschneideinheit (4, 6) nach Anspruch 3, wobei der Kanal (54) derartig angeordnet ist, dass, wenn die Drehschneideinheit (4, 6) zum Transport oder zum Lagern ausgelegt ist und sich der Kanal (54) in einer im Wesentlichen senkrechten Ebene befindet, jede Flüssigkeit auf der Oberfläche des Gehäuses (14, 18) der Schwerkraft folgend den Kanal (54) entlanggeleitet wird.

5. Drehschneideinheit (4, 6) nach einem der vorhergehenden Ansprüche, wobei das zerbrechliche Element (40) einen geschwächten Abschnitt (50, 52) der Welle (24) zwischen dem Antriebseingangselement und dem Antriebsausgangselement (32) umfasst.

6. Drehschneideinheit (4, 6) nach einem der vorhergehenden Ansprüche, wobei das Antriebseingangselement ein Zahnrad (28) umfasst.

7. Drehschneideinheit (4, 6) nach einem der vorhergehenden Ansprüche, wobei das Antriebsausgangselement (32) eine Drehschneidbaugruppe umfasst oder an dieser angebracht ist, die eine Mehrzahl von Schermessern (8) beinhaltet.

8. Mähwerk (4) für einen Rasenmäher, umfassend eine Haltestruktur, eine Mehrzahl von Drehschneideinheiten (6) nach einem der vorhergehenden Ansprüche, wobei jede Drehschneideinheit (4, 6) an der Haltestruktur befestigt ist, und einen Antriebsmechanismus, der das Antriebseingangselement für jede Drehschneideinheit (4, 6) antreibt.

9. Mähwerk (4) nach Anspruch 8, wobei die Haltestruktur einen umschlossenen Halteträger umfasst, wobei der Antriebsmechanismus innerhalb des umschlossenen Halteträgers untergebracht ist, und wobei das Gehäuse (14, 18) jeder Drehschneideinheit (4, 6) derartig am Halteträger befestigt ist, dass sich die Welle (24) durch eine Öffnung im Halteträger erstreckt, wobei sich das Antriebseingangselement von jeder Drehschneideinheit (4, 6) im Halteträger im Eingriff mit dem Antriebsmechanismus befindet, und sich das Antriebsausgangselement (32) jeder Drehschneideinheit (4, 6) außerhalb des Halteträgers befindet.

10. Rasenmäher, der ein Mähwerk (4) nach einem der vorhergehenden Ansprüche 8 oder 9 und ein Fahrzeug beinhaltet, welches das Mähwerk (4) hält.

## Revendications

1. Unité de coupe rotative (4, 6) pour une tondeuse agricole, comprenant un boîtier (14, 18) portant un palier de rotation (18) possédant un axe de rotation, et un ensemble de rotor (20) supporté par le palier (18) pour la rotation relativement au boîtier (14, 18) autour de l'axe de rotation, l'ensemble de rotor (20) comprenant un arbre (24) qui se prolonge à travers le palier (18), un élément d'entrée d'entraînement, à une extrémité d'entrée de l'arbre (24), pour la transmission de l'entraînement rotatif à l'arbre (24), et un élément de sortie d'entraînement (32), à une extrémité de sortie de l'arbre (24), pour recevoir l'entraînement rotatif de l'arbre (24), un élément frangible (40) entre l'élément d'entrée d'entraînement et l'élément de sortie d'entraînement (32), configuré pour se rompre lorsqu'il est soumis à une charge excessive de façon à interrompre la transmission de l'entraînement rotatif entre l'élément d'entrée d'entraînement et l'élément de sortie d'entraînement (32), et un mécanisme de rétention (44) empêchant la séparation de l'élément de sortie d'entraînement (32) du boîtier (14, 18) lors de la rupture de l'élément frangible (40), mais permettant la rotation de l'élément de sortie d'entraînement (32) relativement au boîtier (14, 18), le boîtier (14, 18) comprenant une gaine (14A, 80) possédant un premier bout et un deuxième bout, une première bride (32, 48) au premier bout de la gaine (14A, 80) et une deuxième bride (32, 48) au deuxième bout de la gaine (14A, 80), les première et deuxième brides s'étendant radialement vers l'extérieur depuis la gaine (14A, 80) en définissant un canal (54) sur la surface extérieure de la gaine (14A, 80) entre les première et deuxième brides, le mécanisme de rétention (44) comprenant un jeu de griffes de rétention (46) s'étendant radialement vers l'intérieur au-delà d'un pourtour extérieur d'au moins une des brides, et le canal (54) possédant un profil substantiellement en U et s'étendant de façon circonférentielle autour de la gaine.

2. Unité de coupe rotative (4, 6) selon la revendication 1, la première bride (32, 48) comprenant une bride de montage (32, 48) pour le montage de l'unité de coupe rotative (4, 6) sur une barre de coupe (4).

3. Unité de coupe rotative (4, 6) selon une quelconque des revendications précédentes, le canal (54) se trouvant dans un plan substantiellement horizontal lorsque l'unité de coupe rotative (4, 6) est configurée pour une opération de tonte, et substantiellement vertical lorsque l'unité de coupe rotative (4, 6) est configurée pour le transport ou l'entreposage.

4. Unité de coupe rotative (4, 6) selon la revendication 3, le canal (54) étant agencé de sorte que lorsque l'unité de coupe rotative (4, 6) est configurée pour le transport ou l'entreposage, avec le canal (54) dans un plan substantiellement vertical, tout liquide présent librement sur la surface du boîtier (14, 18) étant guidé pour s'écouler sous gravité le long du canal (54).

5. Unité de coupe rotative (4, 6) selon une quelconque des revendications précédentes, l'élément frangible (40) comprenant une partie fragilisée (50, 52) de l'arbre (24) entre l'élément d'entrée d'entraînement et l'élément de sortie d'entraînement (32).

6. Unité de coupe rotative (4, 6) selon une quelconque des revendications précédentes, l'élément d'entrée d'entraînement comprenant un engrenage (28).

7. Unité de coupe rotative (4, 6) selon une quelconque des revendications précédentes, l'élément de sortie d'entraînement (32) comprenant un ensemble de coupe rotative comprenant une pluralité de lames de coupe (8), ou étant montée sur celui-ci.

8. Barre de coupe (4) pour une tondeuse agricole, comprenant une structure de support, une pluralité d'unités de coupe rotative (6) selon une quelconque des revendications précédentes, chaque unité de coupe rotative (4, 6) étant monté sur la structure de support, et un mécanisme d'entraînement entraînant l'élément d'entrée d'entraînement de chaque unité de coupe rotative (4, 6).

9. Barre de coupe (4) selon la revendication 8, la structure de support comprenant une poutrelle porteuse intégrée, le mécanisme d'entraînement étant contenu dans la poutrelle porteuse intégrée, et le boîtier (14, 18) de chaque unité de coupe rotative (4, 6) étant monté sur la poutrelle porteuse de sorte que l'arbre (24) se prolonge à travers une ouverture de la poutrelle porteuse, l'élément d'entrée d'entraînement de chaque unité de coupe rotative (4, 6) étant situé à l'intérieur de la poutrelle porteuse en prise avec le mécanisme d'entraînement, et l'élément de sortie d'entraînement (32) de chaque unité de coupe rotative (4, 6) étant situé à l'extérieur de la poutrelle porteuse.

10. Tondeuse agricole comprenant une barre de coupe (4) selon une quelconque des revendications 8 ou 9 précédentes, et un véhicule supportant la barre de coupe (4).
